(19) Europäisches Patentamt
European Patent Office
Office européen des brevets

(11) Publication number: **0 413 096 A2**

# (12) EUROPEAN PATENT APPLICATION

(21) Application number: **90110488.5**

(22) Date of filing: **01.06.90**

(51) Int. Cl.[5]: **C04B 41/87**, C04B 35/56, F01D 5/28, F02F 7/00

The title of the invention has been amended (Guidelines for Examination in the EPO, A-III, 7.3).

(30) Priority: **18.08.89 JP 211391/89**

(43) Date of publication of application: **20.02.91 Bulletin 91/08**

(84) Designated Contracting States: **DE FR GB**

(71) Applicant: **NKK CORPORATION**
**1-2 Marunouchi 1-chome, Chiyoda-ku**
**Tokyo(JP)**

(72) Inventor: **Torizuka, Shiro, C/o NKK Corporation**
**1-2 Marunouchi 1-chome, Chiyoda-ku**
**Tokyo(JP)**
Inventor: **Nishio, Hiroaki, C/o NKK Corporation**
**1-2 Marunouchi 1-chome, Chiyoda-ku**
**Tokyo(JP)**

(74) Representative: **Patentanwälte Grünecker, Kinkeldey, Stockmair & Partner**
**Maximilianstrasse 58**
**D-8000 München 22(DE)**

## (54) Coated boron carbide sintered body.

(57) A boron carbide sintered body of which the surface is coated with a membrane composed of SiC, $Si_3N_4$ or a mixture of SiC and $Si_3N_4$. The boron carbide sintered body comprises 8 to 35 wt. % of carbon short fibers and/or silicon carbide whiskers in the sum, 0 to 20 wt. % of silicon carbide and/or carbon in the sum, and the remainders being boron carbide and unavoidable impurities. In the sintered body of the invention, since $B_4C$ constitutes the principal part, the sintered body has a low specific gravity and nevertheless it has a high hardness and a high strength. Moreover, it is excellent in resistance to oxidation at a high temperature imparted by the coating membrane of SiC or $Si_3N_4$ formed on the outside. The carbon short fibers and silicon carbide whiskers incorporated into the sintered body check the progress of cracks when they are produced in the sintered body, and improve the fracture toughness.

EP 0 413 096 A2

# BORON CARBIDE SINTERED BODY

## BACKGROUND OF THE INVENTION

### Field of the Invention

$B_4C$ has a high hardness, a high strength and an excellent wear resistance, and is used for wear-resistant parts such as nozzles and bulletproof plates. Moreover, it has an excellent neutron absorption ability, and is used for various parts for atomic energy relation such as controlling materials and shielding materials for reactor. Since it has a low specific gravity and a high specific strength, it can be used for engine parts by improving high temperature properties. This invention relates to a boron carbide sintered body utilizable for such materials.

### Description of the Prior Art

$B_4C$ sintered body is a low specific gravity high hardness high strength sintered body having a density of about 2.48 to 2.54 g/cm$^3$, a micro-Vickers hardness of about 3,200 kg/mm$^2$ and a three-point bending strength of about 50 to 100 kg/mm$^2$. Whereas, it is hard to be sintered, and it is necessary for densification to be sintered through a hot pressing at higher than 2,100 °C. Dense boron carbide having a purity of more than 99 % has a fracture toughness of about 3.7 MPam $^{1/2}$ (G. de With: Journal of Materials Science, Vol, 19, pp 457-466, 1984).

Incidentally, a turbo charger is known as a means to improve power performance of piston engines having the same cubic capacity. A rotor made of silicon nitride having a low specific gravity excellent in high temperature strength has been put to practical use for improving power performance, particularly to reduce the turbo lag, i.e. the time to elevate the rotational speed of a turbo charger to begin to work at the acceleration by decreasing the weight of the rotor. The rotor rotates at a high speed of more than 100,000 rpm in an exhaust gas near 900 °C.

It is known a turbo diesel complex engine where a turbine is attached to behind the engine for recovering thermal energy in the exhaust gas. To use silicon nitride for the rotor of the turbine is also being investigated.

A high efficiency gas turbine is known of which the inlet temperature of the turbine is 1,200 to 1,500 °C. The turbine is used for the generation of electricity or for automobile. Silicon nitride and silicon carbide are being investigated to use for the rotor of the gas turbine.

As the form of the rotor, there are axial-flow type and radial-flow type, and there are the case of forming integrally and the case of forming divisionally and assembling it. In the latter case, blade portion or shaft portion can be separated.

As mentioned heretofore, $B_4C$ sintered body has a high wear resistance and a high strength, and it is one of the lowest specific gravity materials as ceramic materials. Therefore, it has a high specific strength, and should be very excellent as the materials for automobile, aerospace and the like. Nevertheless, it has not been used in the above field, particularly as parts of an engine, because it sis inferior in resistance to oxidation at a high temperature such as higher than 500 °C. In order to use a ceramic material as a machine part, it is necessary to have a fracture toughness of at least 5 MPam $^{1/2}$, preferably 8 MPam $^{1/2}$. However, since the fracture toughness of conventional boron carbide is only 3.7 MPam $^{1/2}$, the use for machine parts is restricted.

Conventional ceramic rotors are made of silicon nitride or silicon carbide. Silicon nitride shows a high three-point bending strength of 9 to 130 kg/mm$^2$ at ordinary temperature. However, when temperature is beyond 1,000 °C, the strenth begins to decrease, and the strength at 1,350 °C corresponds to only 50 to 70% of the strength at ordinary temperature. On the other hand, silicon carbide shows a similar or slightly higher strength even at 1,350 °C compared with the strength at ordinary temperature, however, the strengh is only 50 to 90 kg/mm$^2$. The density of both materials is about 3.2 g/cm$^3$. The density of the rotors is desired to decrease the weight in order to shorten the time to reach high speed rotation and to reduce the centrifugal force loaded on the rotor.

## SUMMARY OF THE INVENTION

An object of the invention is to provide a ceramic sintered body excellent in resistance to oxidation at a high temperature as well as having a high wear resistance, a high strength and a low specific gravity.

Another object of the invention is to provide a ceramic sintered body having a sufficient fracture toughness for machine parts.

Another object of the ivention is to provide a ceramic sintered body having a high three-point bending strength even at a high temperature.

The present invention has been made in order to achieve the above objects. After various investigations, the inventors noticed $B_4C$ sintered body, and found that when $B_4C$ sintered body is coated with a membrane of SiC, $Si_3N_4$ or a mixture of SiC and $Si_3N_4$, the membrane is strong and improves remarkably the resistance to oxidation at a high temperature of $B_4C$ sintered body. While, they also found that when carbon short fibers or silicon carbide whiskers are incorporated into $B_4C$ sintered body, the sintering ability and the fracture toughness are improved without reducing the superior properties of the $B_4C$ sintered body.

## DETAILED DESCRIPTION OF THE INVENTION

SiC is one of the most excellent ceramics in high temperature properties, and the strength does not reduce up to 1,500°C. It is also excellent in resistance to oxidation, and when it is heat-treated at 1,350°C for 100 hours under atmospheric conditions, the weight increase by oxidation is less than 0.1 mg/cm$^2$. $Si_3N_4$ and sialon also have a resistance to oxidation at a high temperature, and effective as the coating membrane of $B_4C$ sintered bodies. The thickness of the membrane is more than 0.05 µm, preferably more than 0.1 µm. The upper limit of the membrane thickness is different according to the required properties of the sintered body, and it is usually less than 20 % preferably less than 5 % of the thickness of the sintered body. In any event, the upper limit of the membrane thickness is about 2,000 µm, preferably about 500 µm.

As a method of forming a membrane of SiC, $Si_3N_4$ or a mixture thereof, the surface of a sintered body of which the principal component is $B_4C$ is coated with powder or membrane composed of an organic or inorganic compound or a mixture thereof of which a principal component is Si. The coated sintered body is heated to convert Si into SiC, $Si_3N_4$ or a mixture thereof, and finally, the surface of the sintered body is coated with a dense membrane of SiC, $Si_3N_4$ or a mixture thereof. The organic or inorganic compound is capable of producing SiC, $Si_3N_4$ or a mixture thereof by heat treatment. Such an organic compound includes organic silicon polymers such as polycarbosilane, polysilazane, polysilastyrene and polysilane. They are decomposed by heating as described in the following reaction formulas to produce SiC or $Si_3N_4$. It is effective to blend SiC or $Si_3N_4$ powder into the organic silicon polymer.

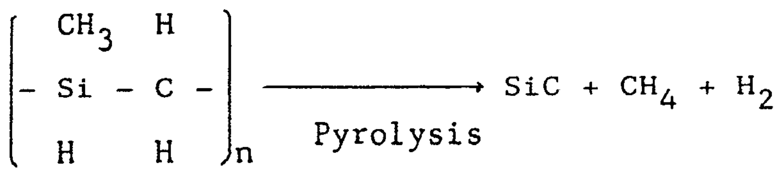


Polycarbosilane

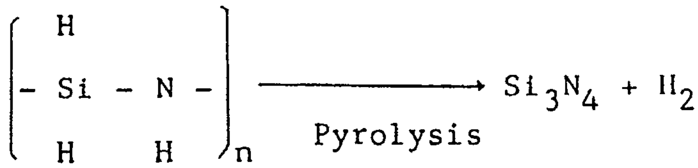


Polysilazane

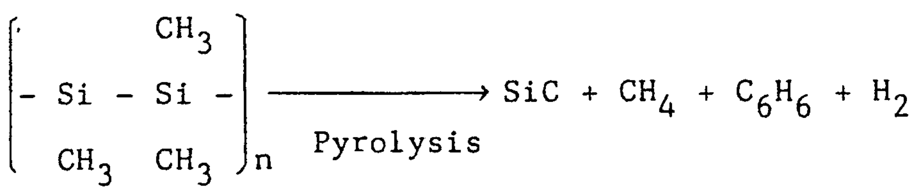


Polysilastyrene

When the organic silicon polymer is liquid, it may be applied as it is. While, when the viscosity is too high or the concentration is desired to be lowered, the organic silicon polymer may be adjusted to a suitable concentration by adding a solvent such as alcohols, alkanes, benzenes, alkenes, ketones, ethers, carboxylic compounds, chorine compounds and fluorine compounds, such as tetrahydrofuran, methanol, ethanol, n-propanol, isopropanol, n-butanol, isobutanol, acetone, benzene, toluene, xylene, hexane, ether, dioxane, chloroform, methylene chloride, petroleum ether, petroleum benzine, ligroin and fleon. The coating may be conducted according a known method such as immersing, spray coating or brush coating. After the coating, the solvent is removed by drying if necessary, and then heat treatment is conducted. As the heat treatment conditions, a suitable tempetature is 450 to 2,400° C, preferably 1,000 to 2,150° C. A suitable heating time is 30 minutes to 10 hours according to the tempetarure, and 1 to 2 hours is usually preferred. The heat treatment is conducted in nitrogen gas, argon gas, ammonia gas, a mixed gas thereof or under vacuum, and a suitable pressure is about 1 x $10^{-5}$ torr. In the case of $Si_3N_4$ membrane, the heat treatment is preferably conducted in an nitrogen gas atmosphere. During the heat treatment, sintering also proceeds, and a dense SiC or $Si_3N_4$ is melted or evaporated to form a membrane.

As another method of forming a membrane, Si membrane is previously formed on the surface of a sintered body, and the Si membrane is converted to SiC or $Si_3N_4$ membrane by heat treatment. As such a method, there are the CVD method and the PVD method. In the case of the CVD method, the SiC or $Si_3N_4$ membrane is formed by utilizing the deposition of metal silicon by the decomposition of monosilane and the formation of a silicon carbide membrane by the reaction of the metal silicon with the carbon contained in the sintered body, the formation of a silicon carbide membrane by the reaction of various chlorosilanes with hydrocarbon gas, the formation of silicon nitride membrane by the reaction of various chlorosilanes with ammonia gas, the formation of a silicon carbide/silicon nitride mixture membrane, or the like. in the case of the PVD method, a silicon carbide membrane may be formed by generating silicon vapor to deposit on the surface of the sintered body and utilizing the reaction of the silicon with the carbon contained the sintered body. Besides, a Si membrane is formed by the powder packing method composed of packing a $B_4C$ sintered body with a powder containing Si, heating it to generate Si vapor to deposit on the surface of the sintered body. The salt bath method is also effective composed of dissolving Si in a bath of melted salt such as borax ($Na_2B_4O_7$) and putting a $B_4C$ sintered body in the melted salt bath to deposit Si on the surface.

In the case of forming a SiC membrane, when 0.5 to 40 wt. % of free carbon which is not bonded to boron is allowed to exist in a $B_4C$ sintered body, the carbon diffuses to react with the Si on the surface by heat treatment to form a SiC membrane. When the content of the free carbon is less than 0.5 wt. %. the Si

on the surface cannot sufficiently be converted to SiC, and the surface is composed of a mixture of Si and SiC. While, when the content of the free carbon is beyond 40 wt. %, the strength of the sintered body is sharply reduced.

The fracture toughness of a $B_4C$ sintered body can be improved by incorporating carbon short fibers or silicon carbide whiskers.

When carbon short fibers are incorporated, a suitable composition is 8 to 30 wt. % of carbon short fibers, 0 to 20 wt. % of silicon carbide and/or carbon in the sum, and the remainder being boron carbide and unavoidable impurities.

Preferred carbon short fibers used as the raw material are high elasticity having a Young's modulus of 30,000 to 80,000 kg/mm$^2$. When the Young's modulus is less than 30,000 kg/mm$^2$, strain is liable to occur in the carbon short fibers compared with the matrix resulting to reduce sharply the contribution to the improvement in the strength of the sintered body. In general, the strength of carbon short fibers decrease with the elevation of the Young's modulus. When the Young's modulus is beyond 80,000 kg/mm$^2$, the contribution to the improvement in the strength of the sintered body is sharply reduced. The carbon short fibers may be PAN derived or pitch derived. A suitable diameter of the carbon short fibers is 3 to 10 $\mu$m. In the case that the diameter is less than 3 $\mu$m, when a crack is generated in the sintered body, the progress of the crack cannot be checked. While, when the diameter is beyond 10 $\mu$m, the checking effect to the progress of cracks decreases due to the decrease of the number of the short fibers in the sintered body. Moreover, the short fiber itself becomes the starting point of breakage, and as a result, the strength of the sintered body is decreased. A suitable ratio of the fiber length to the fiber diameter, i.e. aspect ratio, is 3 to 30. When the aspect ratio is less than 3, the progress of cracks cannot be checked. While, when the aspect ratio is beyond 30, the short fibers interfere the contraction of the materials accompanied with sintering. As a result, the sintered body is not sufficiently densified, and the strength of the sintered body is decreased. A suitable carbon short fiber content of the sintered body is 8 to 30 wt. %. When the content is less than 8 wt. %, the effect to improve the fracture toughness is small. While, when the content is beyond 30 wt. %, entanglement of the short fibers increases resulting to inhibit the densification during sintering.

A suitable content of silicon carbide and/or carbon is 0 to 20 wt. % in the sum. The strength of the sintered body is improved by blending a suitable amount of silicon carbide, though the sintered body becomes heavier by the blending, because the true density of silicon carbide is 3.2 g/cm$^3$ which is greater that the true density of boron carbide of 2.5 g/cm$^3$. While, since the true density of carbon is 2.25 g/cm$^3$, to add carbon is preferred in view of rendering the weight lighter. The blending of silicon carbide and carbon is not essential, and the maximum content is 20 wt. %. When the content is beyond 20 wt. % the additional effect to improve the strength is little. The silicon carbide and carbon may be combined. When either of them is used, silicon carbide is preferable.

When silicon carbide whiskers are incorporated, a suitable composition is 8 to 35 wt. % of silicon carbide whiskers, 0 to 15 wt. % of carbon, and the remainder being boron carbide and unavoidable impurities.

A suitable diameter of the silicon carbide whiskers used as the raw material is 0.5 to 10 $\mu$m. In the case that the diameter is less than 0.5 $\mu$m, when a crack is generated in the sintered body, the progress of the crack cannot be checked. While, when the diameter is beyond 10 um, the checking effect to the progress of cracks decreases due to the decrease of the number of the whiskers in the sintered body. Moreover, the whisker itself becomes the starting point of breakage, and as a result, the strength of the sintered body is decreased. A suitable ratio of the whisker length to the whisker diameter, i.e. aspect ratio, is 3 to 30. When the aspect ratio is less than 3, the progress of cracks cannot be checked. While, when the aspect ratio is beyond 30, the whiskers interfere the contraction of the materials accompanied with sintering. As a result, the sintered body is not sufficiently densified, and the strength of the sintered body is decreased. A suitable silicon carbide whisker content of the sintered body is 8 to 35 wt. %. When the content is less than 8 wt. %, the effect to improve the fracture toughness is small. While, when the content is beyond 35 wt. %, entanglement of the whiskers increases resulting to inhibit the densification during sintering.

A suitable content of carbon is 0 to 15 wt. %. The blending up to 15 wt. % does not vary or rather increases the strength, but when the content is beyond 15 wt. %, the strength decreases.

Silicon carbide whiskers as the raw material have naturally an oxide membrane on the surface, both of carbon short fibers and silicon carbide whiskers contain a trace quantity of metal impurities. Besides, boron carbide powder as the raw material has an oxide membrane on the surface, and contains a trace quantity of metal impurities. These are preferably less. However, when the content of unavoidable impurities is less than 2 wt. % in the sum, the influence of them upon mechanical properties of the sintered body is small. Though silicon carbide whiskers and boron carbide powder as the raw materials occasionally contain a trace quantity of carbon, it is harmless. The raw material of carbon can be selected from carbon black,

thermosetting resins such as phenol resin and furan resin, coal tar pitch, petroleum coke, coal pitch coke, natural graphite and the like.

Carbon short fibers and silicon carbide whiskers may be combined. In this case, a suitable composition is 8 to 35 wt. % of carbon short fibers and silicon carbide whiskers in the sum, 0 to 20 wt. % of silicon carbide and/or carbon in the sum, and the remainder being boron carbide and unavoidable impurities.

To blend at least one of the following materials is effective for improving mechanical properties of the $B_4C$ sintered body in addition to carbon short fiber, silicon carbide, silicon carbide whisker and/or carbon. Such a material includes Al, Mg, Fe, Ni, Cr, Co, Ti, Nb, V, Zr, Mo, Ta, Hb, W, Si, carbides thereof, oxides thereof, nitrides thereof, borides thereof, fluorides thereof, carbon whisker and SiC fiber.

The boron carbide sintered body of which the surface is coated with a membrane of SiC, $Si_3N_4$ or a mixture thereof is effective for a rotor used for a ceramic engine at a high temperature. The rotor includes used for a turbo charger, a turbo diesel complex engine, a gas turbine used for the generation of electricity or for automobile, and it may be axial-flow type or radial-flow type. The boron carbide sintered body forming the rotor contains 50 to 100 wt. % of $B_4C$. When the content is less than 50 wt. %, the effect is insufficient obtained by reducing the weight of the rotor due to using $B_4C$ of which the specific gravity is small. When the rotor is made of $B_4C$ alone, it is the lightest. However, in this case, the fracture toughness is small, and therefore, to blend at least one of the following materials is preferred. Such a material includes Al, Mg, Fe, Ni, Cr, Co, Ti, Nb, V, Zr, Mo, Ta, Hb, W, Si, carbides thereof, oxides thereof, nitrides thereof, borides thereof, fluorides thereof, SiC whisker, carbon whisker, SiC fiber, carbon fiber, carbon black, thermosetting resins such as phenol resin and furan resin, coal tar pitch, petroleum coke, coal pitch coke, natural graphite and the like.

In the sintered body of the invention, since $B_4C$ constitutes the principal part, the sintered body has a low specific gravity, and nevertheless it has a high hardness and a high strength. Moreover, it is excellent in resistance to oxidation at a high temperature imparted by the coating membrane of SiC or $Si_3N_4$ formed on the outside. The carbon short fibers and silicon carbide whiskers incorporated into the sintered body check the progress of cracks, when they are produced in the sintered body, and improve the fracture toughness. While, silicon carbide and carbon raise the bonding of boron carbide particles.

Therefore, by forming a dense coating membrane of SiC, $Si_3N_4$ or a mixture thereof on the surface of a $B_4C$ sintered body, the sintered body is imparted with a resistance to oxidation at a high temperature comparable with SiC and $Si_3N_4$. The use of conventional $B_4C$ sintered bodies is restricted to the vicinity of ordinary temperature. Whereas, the use of $B_4C$ sintered bodies is extended to high temperature regions by the invention, and it can be used as a heat-resistant material requiring a high specific strength such as turbo chargers and gas turbines.

By incorporating carbon short fibers or silicon carbide whiskers, the fracture toughness of the $B_4C$ sintered body is improved. When the $B_4C$ sintered body is coated with the above coating membrane, resistance to oxidation at a high temperature is further imparted to obtain a sintered body excellent in strength, toughness and resistance to oxidation at a high temperature.

By making a rotor of boron carbide coated with the above coating membrane, the density of the rotor can be rendered small, i.e. 2.4 to 2.6 g/cm$^3$, compared with conventional rotors made of silicon nitride or silicon carbide of which the density is about 3.2 g/cm$^3$. Such a light rotor of the invention holds a high strength from ordinary temperature to a high temperature. Since the strength at a higher temperature is greater, the rotor of the invention is superior to conventional ceramic rotors particularly at a high temperature.

## EXAMPLES

### Example1

Polycarbosilane was dissolved in tetrahydrofuran, and applied onto a $B_4C$ sintered body. After air-drying, the sintered body was heated at 1,600 °C for 1 hour in an inert gas atmosphere to decompose the polycarbosilane to form a SiC membrane, Subsequently, the temperature of heat treatment was elevated to 2,100 °C to sinter the SiC membrane 2U as well as to bind it to the $B_4C$ sintered body. The SiC membrane was observed by SEM, and it was confirmed that an uniform membrane was formed in a thickness of 3 μm.

The SiC coated sintered body was heat-treated at 1,350 °C for 100 hours under atmospheric conditions, and then, the weight increase by oxidation and the variation of the strength were measured. The

results are shown in Table 1.

Table 1

| | SiC Coated $B_4C$ Sintered Body | $B_4C$ Sintered Body |
|---|---|---|
| Weight Increase by Oxidation ($mg/cm^2$) | 0.05 | 12 |
| Three-Point Bending Strength ($kg/mm^2$) | | |
| Before Heat Treatment | 85 | 85 |
| After Heat Treatment | 80 | 30 |

By the SiC coating, $B_4C$ sintered body was oxidized little, and the strength was not decreased.

Example 2

Polysilastyrene was dissolved in tetrahydrofuran, and applied onto a $B_4C$ sintered body. After air-drying, the sintered body was heated at 1,200 °C for 1 hour in an inert gas atmosphere to decompose the polysilastyrene to form a SiC membrane. Subsequently, the temperature of heat treatment was elevated to 2,050 °C to sinter the SiC membrane as well as to bind it to the $B_4C$ sintered body. The SiC membrane was observed by SEM, and it was confirmed that an uniform membrane was formed in a thickness of 5 µm.

The SiC coated sintered body was heat-treated at 1,350 °C for 100 hours under atmospheric conditions, and then, the weight increase by oxidation and the variation of the strength were measured. The results are shown in Table 2.

Table 2

| | SiC Coated $B_4C$ Sintered Body | $B_4C$ Sintered Body |
|---|---|---|
| Weight Increase by Oxidation ($mg/cm^2$) | 0.04 | 12 |
| Three-Point Bending Strength ($kg/mm^2$) | | |
| Before Heat Treatment | 85 | 85 |
| After Heat Treatment | 82 | 30 |

By the SiC coating, $B_4C$ sintered body was oxidized little, and the strength was not decreased.

Example 3

Polysilazane was applied onto a $B_4C$ sintered body, and heated at 1,600 °C for 10 hours in a nitrogen gas atmosphere. By the heating, polysilazane was decomposed to form $Si_3N_4$ membrane. The sintered body was treated with HIP treatment at 1,800 °C at 2,000 atm for 2 hours in a nitrogen-argon mixed gas atmosphere. As a result, a dense $Si_3N_4$ membrane about 2 µm in thickness was formed on the surface of the sintered body.

The $Si_3N_4$ coated sintered body was heat-treated at 1,350 °C for 100 hours under atmospheric conditions, and then, the weight increase by oxidation and the variation of the strength were measured. The

results are shown in Table 3.

Table 3

| | $Si_3N_4$ Coated $B_4C$ Sintered Body | $B_4C$ Sintered Body |
|---|---|---|
| Weight Increase by Oxidation ($mg/cm^2$) | 0.06 | 12 |
| Three-Point Bending Strength ($kg/mm^2$) | | |
| Before Heat Treatment | 85 | 85 |
| After Heat Treatment | 85 | 30 |

By the $Si_3N_4$ coating, $B_4C$ sintered body was oxidized little, and the strength was not decreased.

Example 4

Phenol resin was added to $B_4C$ at a ratio by weight of 2 : 98, and sintered to obtain a $B_4C$ sintered body containing 1.0 wt. % of free carbon. The sintered body was immersed in a borax ($Na_2B_4O_7$) melted salt bath where Si was dissolved at 1,040 °C for 10 hours to deposit Si on the surface of the sintered body. During immersing, the carbon in the sintered body was diffused onto the surface, and bound to the Si deposited on the surface to form a SiC membrane. Subsequently, the sintered body was heated at 1,900 °C for 3 hours in an argon gas atmosphere. As a result of X-ray analysis, Si was not detected, and it was confirmed that the membrane was composed of SiC alone. By SEM observation, it was found that the SiC membrane was uniform and sound.

The SiC coated sintered body was heat-treated at 1,350 °C for 100 hours under atmospheric conditions, and then, the weight increase by oxidation and the variation of the strength were measured. The results are shown in Table 4.

Table 4

| | SiC Coated $B_4C$ Sintered Body | $B_4C$ Sintered Body |
|---|---|---|
| Weight Increase by Oxidation ($mg/cm^2$) | 0.06 | 12 |
| Three-Point Bending Strength ($kg/mm^2$) | | |
| Before Heat Treatment | 85 | 85 |
| After Heat Treatment | 85 | 30 |

By the SiC coating, $B_4C$ sintered body was oxidized little, and the strength was not decreased.

Example 5

A $B_4C$ sintered body containing 30.0 wt. % of free carbon was buried in Si powder, and heat-treated at 1,200 °C for 5 hours in an argon gas atmosphere to deposit Si on the $B_4C$ sintered body. The sintered body was heat-treated at 2,000 °C for 2 hours in an argon gas atmosphere. During the heat treatment, the carbon in the sintered body was diffused onto the surface, and reacted with Si to convert the Si membrane to SiC

membrane. The SiC membrane was dense, and its thickness was about 2 μm.

The SiC coated sintered body was heat-treated at 1,350 °C for 100 hours under atmospheric conditions, and then, the weight increase by oxidation and the variation of the strength were measured. The results are shown in Table 5.

Table 5

| | SiC Coated $B_4C$ Sintered Body | $B_4C$ Sintered Body |
|---|---|---|
| Weight Increase by Oxidation ($mg/cm^2$) | 0.04 | 12 |
| Three-Point Bending Strength ($kg/mm^2$) | | |
| Before Heat Treatment | 85 | 85 |
| After Heat Treatment | 85 | 30 |

By the SiC coating, $B_4C$ sintered body was oxidized little, and the strength was not decreased.

Example 6

To 190 parts by weight of acetone, 10 parts by weight of carbon short fibers having an average diameter of 7 μm and an aspect ratio of 5 to 10 were added, and dispersed using ultrasonic wave. 90 parts by weight of boron carbide having a mean particle size of 0.13 μm and 3 parts by weight of paraffin as forming aid were added thereto, and mixed for 24 hours by a stirrer followed by drying using an rotary evaporator. Coarse grains in the dried powder were crushed by passing a 200 mesh sieve, and after uniaxial pressing at 20 MPa, the pressed matter was subjected to cold isostatic pressing at 300 MPa to obtain a formed body having a size of 20 mm x 10 mm x 70 mm. The formed body was heated up to 500 °C in a nitrogen gas atmosphere to remove paraffin by decomposition. Inorganic polysilazane oil was applied onto the surface of the formed body, and gelated by heating up to 150 °C. The application and gelation were repeated 8 times to form a membrane about 60 μm thick. Boron nitride powder suspended in isopropanol was adhered onto the surface as a reaction inhibitor by spraying followed by drying. Then, the formed body was placed in a Vycor glass bottle, and degassed with heating at 1,200 °C until the vacuum degree reached $10^{-3}$ Torr, and then sealed. The sealed body was subjected to hot isostatic pressing at 1,800 °C at 200 MPa for 2 hours. Vycor glass was removed, and then, boron nitride powder was removed by air blowing to obtain a boron carbide sintered body.

The ratio of the density of the sintered body to the theoretical density, i.e. theoretical density ratio, was 99.8 %, and it was sufficiently densified. The surface was coated with silicon nitride about 20 μm in thickness produced by the conversion of polysilazane. A test piece cut from the sintered body had a three-point bending strength of 94 $kg/mm^2$ and a fracture toughness of 5.3 $MPam^{1/2}$ which were higher than those of the conventional boron carbide obtained in Comparative Example 1 which were 85 $kg/mm^2$ and 3.6 $Mpam^{1/2}$ respectively. The weight increase by oxidation of the sintered body measured in the same method as Example 1 was 0.06 $mg/cm^2$.

Example 7

A sintered body was prepared in the same manner as Example 6, except that the quantity of the carbon short fibers was changed to 20 parts by weight and the quantity of the boron carbide was changed to 80 parts by weight.

The theoretical density ratio of the sintered body was 99.2 % being high, and the three-point bending strength of 112 $kg/mm^2$ and the fracture toughness of 7.2 $MPam^{1/2}$ also exceeded Example 6. The weight increase by oxidation was 0.06 $mg/cm^2$.

Example 8

A sintered body was prepared in the same manner as Example 6, except that the quantity of the carbon short fibers was changed to 30 parts by weight and the quantity of the boron carbide was changed to 70 parts by weight.

The theoretical density ratio of the sintered body was 96.4 %, being slightly lower, the three-point bending strength was decreased to 96 $kg/mm^2$, but the fracture toughness was increased to 8.9 $MPam^{1/2}$. The weight increase by oxidation was 0.05 $mg/cm^2$.

Example 9

Using 10 parts by weight of silicon carbide having a mean particle size of 0.12 $\mu m$, 20 parts by weight of the carbon short fibers and 70 parts by weight of the boron carbide, a sintered body was prepared in the same manner as Example 6.

The theoretical density ratio of the sintered body was high 99.3 %, the three-point bending strength was 114 $kg/mm^2$ and the fracture toughness was 6.9 $MPam^{1/2}$, similar to Example 2. The weight increase by oxidation was 0.06 $mg/cm^2$.

Comparative Example 1

A sintered body was prepared in the same manner as Example 6, except of using the boron carbide alone.

The theoretical density ratio of the sintered body was high 99.5 %, but the three-point bending strength of 85 $kg/mm^2$ and the fracture toughness of 3.6 $MPam^{1/2}$ were low.

Comparative Example 2

Using 25 parts by weight of silicon carbide, 20 parts by wieght of the carbon short fibers and 55 parts by weight of the boron carbide, a sintered body was prepared in the same manner as Example 6.

The theoretical density ratio of the sintered body was high 99.2 %, but the three-point bending strength was decreased to 68 $kg/mm^2$.

Comparative Example 3

Using 35 parts by weight of the carbon short fibers and 65 parts by weight of the boron carbide, a sintered body was prepared in the same manner as Example 6.

The theoretical density ratio of the sintered body was low 89.0 %. The fracture toughness of 8.2 $MPam^{1/2}$, but the three-point bending strength was sharply decreased to 51 $kg/mm^2$.

The above results are summarized in Table 6.

Table 6

| | Examples | | | | Comparative | | |
|---|---|---|---|---|---|---|---|
| | 6 | 7 | 8 | 9 | 1 | 2 | 3 |
| Composition (wt. %) | 10 | 20 | 30 | 20 | 0 | 20 | 35 |
| Carbon (short fiber) | 0 | 0 | 0 | 10 | 0 | 25 | 0 |
| Boron Carbide | 90 | 80 | 70 | 70 | 100 | 55 | 65 |
| Membrane Thickness (μm) | 20 | 20 | 20 | 20 | 20 | 20 | 20 |
| Theoretical Density Ratio (%) | 99.8 | 99.2 | 96.4 | 99.3 | 99.5 | 99.2 | 89.0 |
| Three-Point Bending Strength ($kg/mm^2$) | 94 | 112 | 96 | 114 | 85 | 68 | 51 |
| Fracture Toughness ($MPam^{1/2}$) | 5.3 | 7.2 | 8.9 | 6.9 | 3.6 | 6.8 | 8.2 |
| Weight Increase by Oxidation ($mg/cm^2$) | 0.06 | 0.06 | 0.06 | 0.06 | 0.06 | 0.06 | 0.06 |

Example 10

To 190 parts by weight of acetone, 10 parts by weight of silicon carbide whiskers having an average diameter of 1.2 μm and an aspect ratio of 10 to 20 were added, and dispersed using ultrasonic wave. 90 parts by weight of boron carbide having a mean particle size of 0.13 μm and 3 parts by weight of paraffin as a forming aid were added thereto, and mixed for 24 hours by a stirrer followed by drying using an rotary evaporator. Coarse gains in the dried powder were crushed by passing a 200 mesh sieve, and after uniaxial pressing at 20 MPa, the pressed matter was subjected to cold isostatic pressing at 300 MPa to obtain a formed body having a size of 20 mm x 10 mm x 70 mm. The formed body was heated up to 500° C in a nitrogen gas atmosphere to remove paraffin by decomposition. Inorganic polysilazane oil was applied onto the surface of the formed body, and gelated by heating up to 150° C. The application and gelation were repeated 8 times to form a membrane about 60 μm thick. Boron nitride powder suspended in isopropanol was adhered onto the surface as a reaction inhibitor by spraying followed by drying. Then, the formed body was placed in a Vycor glass bottle, and degassed with heating at 1,200° C until the vacuum degree reached $10^{-3}$ Torr, and then sealed. The sealed body was subjected to hot isostatic pressing at 1,800° C at 200 MPa for 2 hours. Vycor glass was removed, and then, boron nitride powder was removed by air blowing to obtain a boron carbide sintered body.

The theoretical density ratio of the sintered body was 99.6 %, and it was sufficiently densified. The surface was coated with silicon nitride about 20 μm in thickness produced by the conversion of polysilazane. A test piece cut from the sintered body had a three-point bending strength of 95 $kg/mm^2$ and a fracture toughness of 5.3 $MPam^{1/2}$ which were higher than those of the conventional boron carbide obtained in Comparative Example 4 which were 85 $kg/mm^2$ and 3.6 $MPam^{1/2}$ respectively. The weight increase by oxidation of the sintered body measured in the same method as Example 1 was 0.06 $mg/cm^2$.

Example 11

A sintered body was prepared in the same manner as Example 10, except that the quantity of the silicon carbide whiskers was changed to 20 parts by weight and the quantity of the boron carbide was changed to 80 parts by weight.

The theoretical density ratio of the sintered body was high 99.1 %, and the three-point bending strength of 110 $kg/mm^2$ and the fracture toughness of 6.9 $MPam^{1/2}$ were higher than Example 10. The weight increase by oxidation was 0.06 $mg/cm^2$.

Example 12

A sintered body was prepared in the same manner as Example 10, except that the quantity of the silicon carbide whiskers was changed to 30 parts by weight and the quantity of the boron carbide was changed to 70 parts by weight.

The theoretical density ratio of the sintered body was slightly low 96.5 %. The three-point bending strength was 98 kg/mm$^2$, but the fracture toughness was increased to 8.3 MPam$^{1/2}$. The weight increase by oxidation was 0.05 mg/cm$^2$.

Example 13

Using 10 parts by weight of carbon black having a mean particle size of 0.3 μm as a carbon source, 20 parts by weight of the silicon carbide whiskers and 70 parts by weight of the boron carbide, a sintered body was prepared in the same manner as Example 10.

The theoretical density ratio of the sintered body was high 99.3 %, and the three-point bending strength of 108 kg/mm$^2$ and the fracture toughness of 7.0 MPam$^{1/2}$ were similar to Example 11. The weight increase by oxidation was 0.06 mg/cm$^2$.

Comparative Example 4

A sintered body was prepared in the same manner as Example 6, except of using the boron carbide alone.

The theoretical density ratio of the sintered body was high 99.5 %, but the three-point bending strength of 85 kg/mm$^2$ and the fracture toughness of 3.6 MPam$^{1/2}$ were low.

Comparative Example 5

Using 20 parts by weight of carbon black, 20 parts by weight of the silicon carbide whiskers and 60 parts by weight of the boron carbide, a sintered body was prepared in the same manner as Example 10.

The theoretical density ratio of the sintered body was high 99.2 %, but the three-point bending strength was decreased to 66 kg/mm$^2$.

Comparative Example 6

Using 40 parts by weight of the silicon carbide whisker and 60 parts by weight of the boron carbide, a sintered body was prepared in the same manner as Example 10.

The theoretical density ratio of the sintered body was low 89.2 %. The fracture toughness of 8.1 MPam$^{1/2}$ was high, but the three-point bending strength was sharply decreased to 44 kg/mm$^2$.

The results are summarized in Table 7.

Table 7

| | Examples | | | | Comparative | | |
|---|---|---|---|---|---|---|---|
| | 10 | 11 | 12 | 13 | 4 | 5 | 6 |
| Composition (wt. %) | 10 | 20 | 30 | 20 | 0 | 20 | 40 |
| Carbon (whisker) | 0 | 0 | 0 | 10 | 0 | 20 | 0 |
| Boron Carbide | 90 | 80 | 70 | 70 | 100 | 60 | 60 |
| Membrane Thickness (μm) | 20 | 20 | 20 | 20 | 20 | 20 | 20 |
| Theoretical Density Ratio (%) | 99.6 | 99.1 | 96.5 | 99.3 | 99.5 | 99.2 | 89.2 |
| Three-Point Bending Strength (kg/mm$^2$) | 95 | 110 | 98 | 108 | 85 | 66 | 44 |
| Fracture Toughness (MPam$^{1/2}$) | 5.3 | 6.9 | 8.3 | 7.0 | 3.6 | 6.7 | 8.1 |
| Weight Increase by Oxidation (mg/cm$^2$) | 0.06 | 0.06 | 0.05 | 0.06 | 0.06 | 0.06 | 0.06 |

Example 14

To 190 parts by weight of acetone, 20 parts by weight of silicon carbide whiskers having an average diameter of 1.2 µm and an aspect ratio of 10 to 20 were added, and dispersed using ultrasonic wave. 70 parts by weight of boron carbide having a mean particle size of 0.13 µm and 10 parts by weight of carbon black having a mean particle size of 0.3 µm were added thereto, and mixed for 24 hours by stirring followed by spray drying. To the dried powder, 45 parts by weight of paraffin having a melting point of 42 to 44° C and 2 parts by weight of oleic acid as a dispersion medium, and kneaded at 50° C for 24 hours to obtain a slurry.

A mold prepared has a cavity for a radial flow rotor 72 mm in diameter 96 mm in shaft length of which the number of blades is 10. the above slurry was poured in the mold, and solidified by keeping at a pressure of 3 kg/cm$^2$. Then, it was demolded to obtain a molded body in a form of the radial flow rotor.

The molded body was placed in a supercritical extraction apparatus, and the dispersion medium was extracted by flowing carbon dioxide at 200 kg/cm$^2$ at 45° C for 3 hours. As a result, 63 % of the dispersion medium was removed by extraction. The molded body was heated from ordinary temperature to 600° C at a rate of 60° C/min, and kept at 600° C for 30 minutes. The dispersion medium was entirely removed from the naturally cooled molded body.

Subsequently, the molded body was immersed in inorganic polysilazane oil, and the taken out molded body was heated up to 150° C to gelate the inorganic polysilazane. The immersing and gelation were repeated 6 times to form an inorganic polysilazane membrane. On the other hand, 30 parts by weight of boron nitride powder having a mean particle size of 0.5 µm were mixed with 70 parts by weight of isopropanol to obtain slurry A. 30 parts by weight of high silica glass powder having a mean particle size of 5 µm was mixed with 70 parts by weight of isopropanol to obtain slurry B. The molded body was immersed in slurry A, and then taken out followed by drying at ordinary temperature. The above procedure was repeated twice to form a boron nitride powder layer on the inorganic polysilazane membrane. Then, the molded body was immersed in slurry B, and then taken out followed by drying at ordinary temperature. The above procedure was repeated 5 times to form a high silica glass powder layer.

The molded body was placed in a hot isostatic pressing apparatus, and heated at 400° C at 0.2 Torr for 1 hour to finish the thermal decomposition of inorganic polysilazane. Nitrogen gas was introduced up to 1 kg/cm$^2$ (gauge pressure), and heated at 1,300° C for 1 hour. Thereby, the high silica glass was softened to seal the molded body. Subsequently, argon gas was introduced, and heated at 1,600° C at 2,000 kg/cm$^2$ for 1 hour. Then, it was naturally cooled.

In the above HIP treated body, the boron nitride layer acted as a reaction inhibition layer, and the high silica glass layer could easily removed by sandblasting. The remaining boron nitride powder was removed by ultrasonic washing to obtain a radial flow rotor of a boron carbide sintered body coated with silicon nitride converted from inorganic polysilazane.

When the rotor was kept in an air flow at 1,350° C for 100 hours, the weight variation occurred little. The bulk density of the rotor was 2.61 g/cm$^3$. A test piece was cut from the shaft portion, and the three-point bending strength and the fracture toughness measured at ordinary temperature were 105 kg/mm$^2$ and 7.6 MPam$^{1/2}$, respectively. The three-point bending strength at 1,350° C was 112 kg/mm$^2$.

Example 15

To 190 parts by weight of acetone, 30 parts by weight of PAN derived carbon short fibers having an average diameter of 7 µm and an aspect ratio of 15 to 10 were added, and dispersed using ultrasonic wave. 70 parts by weight of boron carbide having a mean particle size of 0.13 µm was added thereto, and mixed for 24 hours by stirring followed by spray drying. To the dried powder, 45 parts by weight of paraffin having a melding point of 42 to 44° C and 2 parts by weight of oleic acid as a dispersion medium, and kneaded at 50° C for 24 hours to obtain a slurry.

A mold prepared has a cavity for an axial flow rotor 192 mm in diameter 72 mm in shaft length of which the number of blades is 36. The above slurry was poured in the mold, and solidified by keeping at a pressure of 3 kg/cm$^2$. Then, it was demolded to obtain a molded body in a form of the axial flow rotor.

The molded body was in a supericritical extraction apparatus, and the dispersion medium was extracted by flowing carbon dioxide at 200 kg/cm$^2$ at 45° C for 3 hours. As a result, 60 of the dispersion medium was removed by extraction. The molded body was heated from ordinary temperature to 600° C at a rate of 60° C/min, and kept at 600 ° C for 30 minutes. The dispersion medium was entirely removed from the naturally coolded molded body.

Subsequently, the molded body was immersed in inorganic polysilazane oil, and the taken out molded body was heated up to 150° C to gelate the inorganic polysilazane. The immersing and gelation were

repeated 6 times to form an inorganic polysilazane membrane. On the other hand, 30 parts by weight of boron nitride powder having a mean particle size of 0.5 μm were mixed with 70 parts by weight of isopropanol to obtain slurry A. 30 parts by weight of high silica glass powder having a mean particle size of 5 μm was mixed with 70 parts by weight of isopropanol to obtain slurry B. The molded body was immersed in slurry A, and then taken out followed by drying at ordinary temperature. The above procedure was repeated twice to form a boron nitride powder layer on the inorganic polysilazane membrane. Then, the molded body was immersed in slurry B, and then taken out followed by drying at ordinary temperature. The above procedure was repeated 5 times to form a high silica glass powder layer.

The molded body was placed in a hot isostatic pressing apparatus, and treated in the same manner as Exaple 14 to obtain an axial flow rotor of a boron carbide sintered body coated with silicon nitride.

When the rotor was kept in an air flow at 1,350 ° C for 100 hours, though the surface was discolored by the conversion of silicon nitride to silicon carbide due to the reaction with carbon short fiberes, the weight variation occurred little. The bulk density of the rotor was 2.42 g/cm$^3$. A test piece was cut from the shaft portion, and the three-point bending strength and the fracture toughness measured at ordinary temperature were 92 kg/mm$^2$ and 9.1 MPam$^{1/2}$, respectively. The three-point bending strength at 1,350 ° C was 101 kg/mm$^2$.

## Claims

1. A boron carbide sintered body of which the surface is coated with a membrane composed of siC, $Si_3N_4$ or a mixture of SiC and $Si_3N_4$.
2. The sintered body of claim 1 wherein the thickness of the membrane is 0.05 to 2,000 μm.
3. A process for producing a boron carbide sintered body of which the surface is coated with a membrane composed of SiC, $Si_3N_4$ or a mixture of SiC and $Si_3N_4$ which comprises coating a sintered body of which the principal component is $B_4C$ with an organic or inorganic compound or a mixture thereof of which a principal component is Si and which is capable of producing SiC, $Si_3N_4$ or a mixture thereof by heat treatment and heating to convert the organic or inorganic compound or the mixture thereof to produce SiC, $Si_3N_4$ or a mixture therof.
4. The process of claim 3 wherein said organic compound an organic silicon polymer selected from polycarbosilane, polysilazane, polysilastyrene and polysilane.
5. The process of claim 3 wherein said sintered body of which the principal component is $B_4C$ contains 0.5 to 40 wt. % of free carbon and said membrane is composed of metal silicon.
6. A boron carbide sintered body which comprises 8 to 35 wt. % of carbon short fibers and/or silicon carbide whiskers in the sum, 0 to 20 wt. % of silicon carbide and/or carbon in the sum, and the remainders being boron carbide and unavoidable impurities.
7. The sintered body of claim 6 wherein said carbon short fibers and/or silicon carbide whiskers is carbon short fibers alone and the content of the carbon short fibers is 8 to 30 wt. %.
8. The sintered body of claim 6 wherein said carbon short fibers have a Young's modulus of 30,000 to 80,000 kg/mm$^2$, a diameter of 3 to 10 μm and an aspect ratio of 3 to 30 in a state used as a raw material.
9. The sintered body of claim 6 wherein said carbon short fibers and/or silicon carbide whiskers is silicon carbide whiskers alone and the content of said silicon carbide and/or carbon in the sum is 0 to 15 wt. %.
10. The sintered body of claim 8 wherein said silicon carbide whiskers have a diameter of 0.5 to 10 μm and an aspect ratio of 3 to 30.
11. The sintered body of claim 6, 7 or 9 of which the surface is coated with a membrane composed of SiC, $Si_3N_4$ or a mixture of SiC and $Si_3N_4$.
12. A rotor which comprises a boron carbide sintered body coated with a membrane composed of SiC, $Si_3N_4$ or a mixture of SiC and $Si_3N_4$.